# EUROPÄISCHE PATENTANMELDUNG

(11) **EP 0 819 919 A2**
(43) Veröffentlichungstag der Anmeldung: **21.01.1998**
(21) Anmeldenummer: 97250211.6
(22) Anmeldetag: 16.07.1997
(51) Int. Cl.: G01G 19/00

(54) **Vorrichtung zum Wiegen und Feststellen der Abmessung eines Gegenstandes**

(30) Priorität: 17.07.1996 DE 19628896
(71) Anmelder: Nagler Metall Technik, 92706 Luhe-Wildenau (DE); MCS Micronic Computer Systeme GmbH, 12101 Berlin (DE)
(72) Erfinder: Wingerter, Franz, 92708 Mantel (DE); Mühlich, Reinhold, 13465 Berlin (DE)
(74) Vertreter: Pfenning, Meinig & Partner

(57) **Zusammenfassung**

Es wird eine Vorrichtung zum gleichzeitigen Wiegen und Feststellen der Abmessungen eines quaderförmigen Gegenstandes (wie Postgut) beschrieben. Die Vorrichtung ist mit einer Waagenplatte (7) als Unterlage für den Gegenstand versehen. In der Waagenplatte befinden sich Öffnungen (10,11) für den Durchtritt von Licht jeweils einer Lichtschranke. Oberhalb der Waagenplatte (7) ist ein in eine parallele Lage zu dieser schwenkbarer Deckel (14) angeordnet. Dieser weist den Öffnungen in der Waagenplatte (7) räumlich zugeordnete Lichtschrankenelemente (16) für die Reflexion von Licht auf, wobei der Deckel in seiner zur Waagenplatte (7) parallelen Lage senkrecht zu dieser verschiebbar ist, zur Feststellung der sich senkrecht zur Waagenplatte erstreckenden Abmessung des Gegenstandes. An zwei senkrecht zueinander stehenden Rändern der Waagenplatte (7) sind Anschläge (8) für das Anlegen des Gegenstandes vorgesehen. Die Verschiebung des Deckels (14) zum auf der Waagenplatte (7) liegenden Gegenstand hin wird angehalten, wenn ein Anstieg des Gewichts des Gegenstandes aufgrund der Deckelbelastung festgestellt wird.

## Beschreibung

Die Erfindung betrifft eine Vorrichtung nach dem Oberbegriff des Anspruchs 1.

Die Gebühren für zu beförderndes Postgut werden üblicherweise nach dessen Gewicht und dessen Abmessungen berechnet. Zur Ermittlung der Höhe der Gebühren ist es daher erforderlich, sowohl das Gewicht als auch die Abmessungen des Postguts festzustellen. Dies wird bisher weitgehend manuell in getrennten Schritten durchgeführt, so daß dieser Vorgang relativ arbeitsaufwendig ist.

Es ist daher Aufgabe der vorliegenden Erfindung, eine Vorrichtung zum Wiegen und Feststellen der Abmessungen eines quaderförmigen Gegenstandes mit einer Waagenplatte als Unterlage für den Gegenstand zu schaffen, bei der diese Vorgänge weitgehend automatisch und gleichzeitig durchgeführt werden, so daß der Arbeits- und Zeitaufwand herabgesetzt wird. Diese Aufgabe wird erfindungsgemäß gelöst durch die im kennzeichnenden Teil des Anspruchs 1 angegebenen Merkmale. Vorteilhafte Weiterbildungen der erfindungsgemäßen Vorrichtung ergeben sich aus den Unteransprüchen.

Dadurch, daß in der Waagenplatte Öffnungen für den Durchtritt von Licht jeweils einer Lichtschranke vorgesehen sind, und daß oberhalb der Waagenplatte ein in eine parallele Lage zu dieser schwenkbarer Deckel angeordnet ist, der den Öffnungen in der Waagenplatte räumlich zugeordnete Lichtschrankenelemente für die Reflektion oder das Aussenden und/oder den Empfang von Licht aufweist, wobei der Deckel in seiner zur Waagenplatte parallelen Lage senkrecht zu dieser verschiebbar ist, zur Feststellung der sich senkrecht zur Waagenplatte erstreckenden Abmessung des Gegenstandes, können durch einmaliges Ablegen des Gegenstandes auf der Waagenplatte automatisch dessen Gewicht sowie dessen Abmessungen festgestellt werden, so daß die erforderlichen Gebühren berechnet und angezeigt werden können.

Vorzugsweise sind an zwei senkrecht zueinander stehenden Rändern der Waagenplatte Anschläge für das Anlegen des Gegenstandes vorgesehen, so daß der Gegenstand ohne Mühe und ohne besonderes Geschick stets lagerichtig auf der Waagenplatte abgelegt werden kann.

Vorteilhaft wird die Verschiebung des Deckels zum auf der Waagenplatte liegenden Gegenstand angehalten, wenn ein Anstieg des Gewichts des Gegenstandes aufgrund der Deckelbelastung festgestellt wird. Aus dem bis dahin zurückgelegten Verschiebeweg kann dann die Dicke des aufliegenden Gegenstandes ermittelt werden.

Zweckmäßig sind unterhalb der Öffnungen in der Waagenplatte jeweils ein Lichtsender und ein Lichtempfänger und räumlich zugeordnet im Deckel jeweils ein Reflexionselement angeordnet. Auf diese Weise kann der Deckel durchgehend transparent gehalten werden, so daß auch der Benutzer erkennen kann, ob der Gegenstand richtig angelegt ist und ggf. auch visuell überprüfen kann, ob die Feststellung von dessen Abmessungen korrekt erfolgt. Weiterhin sind bei dieser Anordnung keine elektrischen Leitungen zu dem bewegbaren Deckel erforderlich.

Die Erfindung wird im folgenden anhand eines in den Figuren dargestellten Ausführungsbeispiels näher erläutert. Es zeigen
- Fig. 1:: eine Vorrichtung für die Gebührenbestimmung von Postgut mit hochgeklapptem Deckel;
- Fig. 2:: die Vorrichtung nach Fig. 1 mit heruntergeklapptem Deckel nach Einlegen eines zu vermessenden Gegenstandes;
- Fig. 3:: die Vorrichtung nach Fig. 1 bei heruntergefahrenem Deckel, und
- Fig. 4:: einen senkrechten Schnitt durch eine Lichtschrankenanordnung.

Die dargestellte Vorrichtung wird durch zwei Seitenwände 1 und 2 begrenzt, zwischen denen ein oberer Gehäuseteil 3 sowie ein unterer Gehäuseteil 4 angeordnet sind. Im oberen Gehäuseteil 3 befinden sich ein Fenster für eine Flachbildanzeige 5 zur Darstellung der ermittelten Gebühren sowie mehrere Wahltasten 6 zur Bestimmung der jeweiligen Versandart für das Postgut wie "Brief", "Päckchen", "Einschreiben" und dergleichen.

Der untere Gehäuseteil 4 enthält eine Waage, die nach oben durch eine Waagenplatte 7 abgeschlossen ist. Die Waage arbeitet mit Dehnungsmeßstreifen, so daß die Waagenplatte 7 praktisch feststehend ist. Die Waagenplatte 7 weist an zwei zueinander senkrecht stehenden Rändern Seitenanschläge 8 auf, gegen die das zu vermessende Postgut geschoben wird, so daß es eine definierte Lage auf der Waagenplatte 7 besitzt.

Auf der Waagenplatte 7 sind Markierungen 9 für die Umrisse des Postgutes vorgesehen, die die jeweils maximale Größe für eine bestimmte Gebühr angeben. Auf diese Weise kann auch von der die Vorrichtung bedienenden Person visuell erkannt werden, welcher Gebührenstufe das Postgut hinsichtlich seiner Länge und Breite zuzuordnen ist.

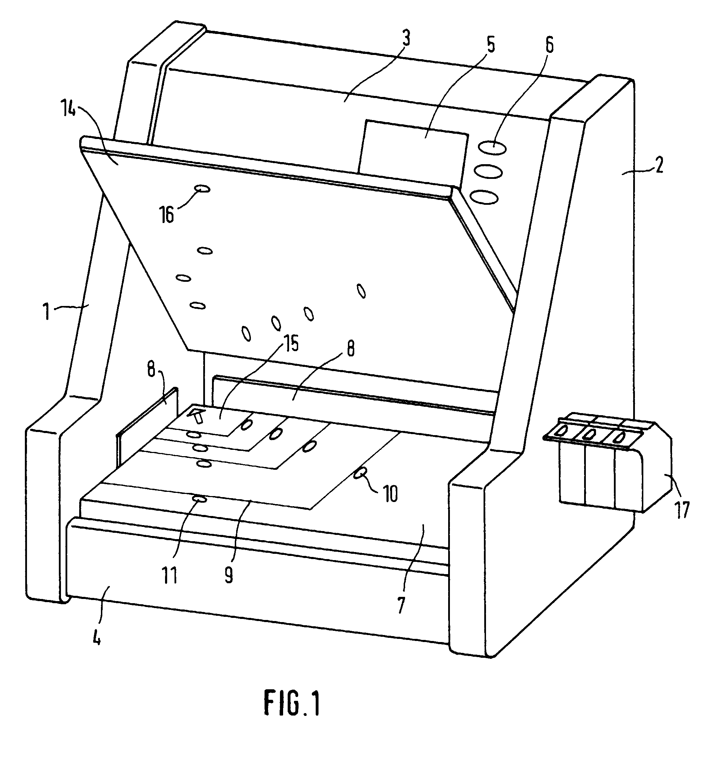

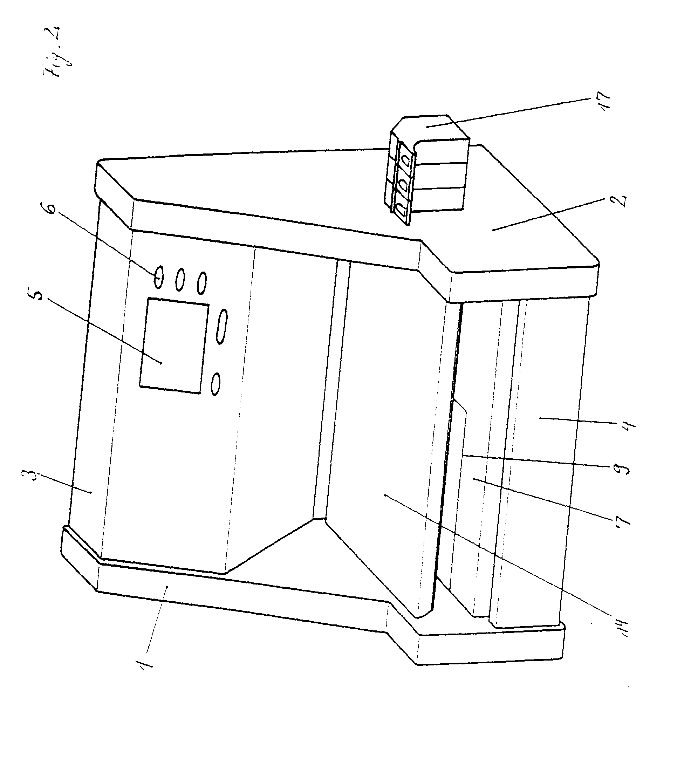

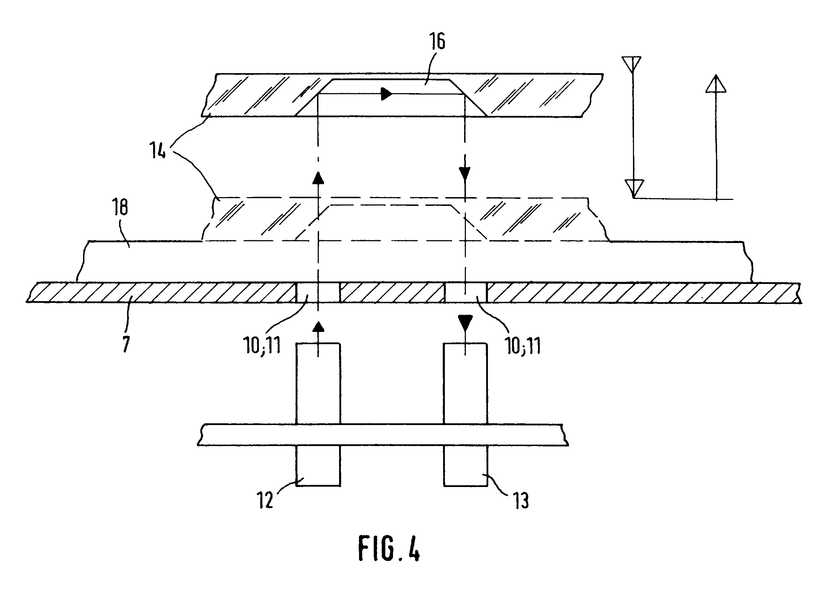

Jeder der Markierungen 9 ist in Längsrichtung des Postgutes eine Öffnung 10 und in Breitenrichtung des Postgutes eine Öffnung 11 in der Waagenplatte 7 zugeordnet. Unterhalb jeder Öffnung 10 bzw. 11 befinden sich nebeneinander angeordnet ein Lichtsender 12 und ein Lichtempfänger 13 einer Lichtschrankenanordnung (siehe Fig. 4). Oberhalb der Waagenplatte 7 ist am oberen Gehäuseteil 3 ein transparenter Deckel 14 um eine sich zwischen den Seitenwänden 1 und 2 erstrekkende Achse schwenkbar angeordnet. Der Schwenkbereich ist durch die in den Figuren 1 und 2 gezeigten Stellungen des Deckels 14 definiert. In der hochgeklappten Stellung nach Fig. 1 ist eine Anlage des Postgutes an die Seitenanschläge 8 mühelos möglich. Zusätzliche Bedienungshinweise 15 auf der Waagenplatte 7 erleichtern die Handhabung. Nach dem Anlegen des Postgutes wird der Deckel 14 in die aus Fig. 2 ersichtliche Stellung heruntergeklappt, in der er parallel zur Waagenplatte 7 liegt. Der Abstand zwischen Waagenplatte 7 und Deckel 14 in dieser Stellung ist so bemessen, daß das Postgut nicht zwischen diesen eingeklemmt wird.

Auf der Unterseite des Deckels 14 befinden sich Lichtreflexionselemente in Form von Prismen 16. Dabei ist jeder Anordnung aus Lichtsender 12 und Lichtempfänger 13 ein Prisma 16 in der Weise zugeordnet, daß bei entsprechend Fig. 2 heruntergeklapptem Deckel das von dem Lichtsender 12 ausgesandte Licht auf den zugeordneten Lichtempfänger 13 reflektiert wird. In Fig. 4 ist dieser Lichtverlauf angedeutet.

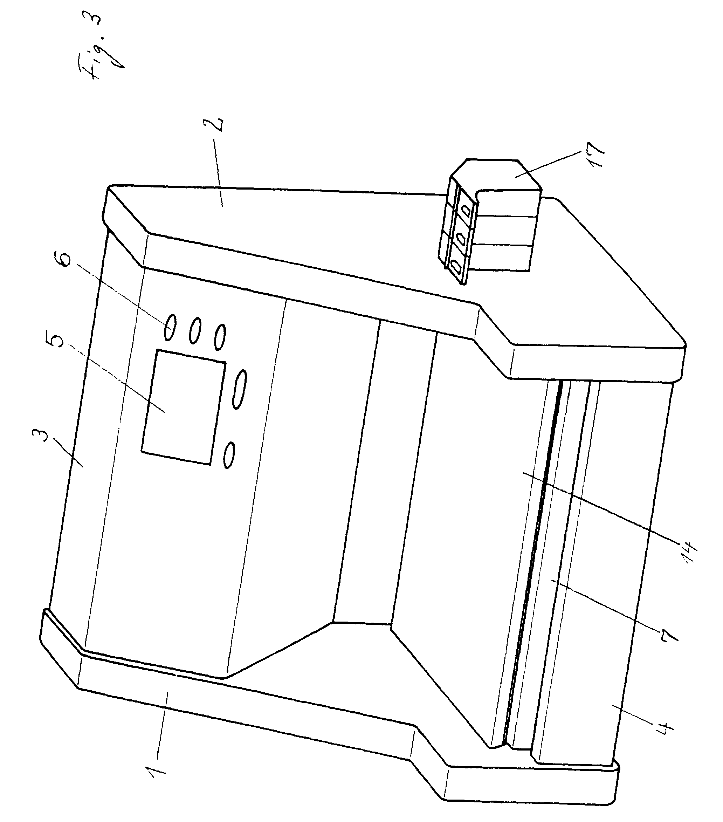

Wenn der Deckel 14 in die Stellung nach Fig. 2 heruntergeklappt ist, wird das auf die Waagenplatte 7 aufgelegte Postgut automatisch gewogen und weiterhin wird festgestellt, welche Öffnungen 10 und 11 vom Postgut abgedeckt sind, so daß ermittelt wird, welcher Gebührenstufe Länge und Breite des Postgutes entsprechen. Anschließend wird der Deckel 14 in seiner parallelen Lage zur Waagenplatte 7 verbleibend automatisch abgesenkt, bis er gegen das Postgut stößt. Die hierdurch von der Waage festgestellte Gewichtszunahme bewirkt ein Anhalten der Absenkbewegung und aus dem bisher zurückgelegten Weg des Deckels 14 kann die Dicke des Postgutes berechnet werden. Fig. 3 zeigt den Deckel 14 in dieser heruntergefahrenen Position.

Somit sind das Gewicht und die Abmessungen des Postgutes bekannt und in Verbindung mit der durch die Wahltasten 6 eingegebenen Versandart können die Gebühren für die Beförderung des Postgutes berechnet und angezeigt werden. Der Deckel 14 wird dann wieder hochgefahren und kann zur Entnahme des Postgutes hochgeklappt werden. Dieses wird entsprechend frankiert, sowie mit Aufklebern über die Versandart wie "Päckchen", "Einschreiben", "Luftpost" und dergl. versehen, die in einer Entnahmeeinrichtung 17 zur Verfügung stehen.

Fig. 4 zeigt den Deckel 14 in seiner hochgefahrenen Position gemäß Fig. 2 und strichliert angedeutet in seiner abgesenkten Position gemäß Fig. 3, in der er auf dem Postgut 18 aufliegt.

## Patentansprüche

1. Vorrichtung zum Wiegen und Feststellen der Abmessungen eines quaderförmigen Gegenstandes (18) mit einer Waagenplatte (7) als Unterlage für den Gegenstand (18),
dadurch **gekennzeichnet**,
daß in der Waagenplatte (7) Öffnungen (10,11) für den Durchtritt von Licht jeweils einer Lichtschranke vorgesehen sind, und
daß oberhalb der Waagenplatte (7) ein in eine parallele Lage zu dieser schwenkbarer Deckel (14) angeordnet ist, der den Öffnungen (10,11) in der Waagenplatte (7) räumlich zugeordnete Lichtschrankenelemente (16) für die Reflexion oder das Aussenden und/oder den Empfang von Licht aufweist, wobei der Deckel (14) in seiner zur Waagenplatte (7) parallelen Lage senkrecht zu dieser verschiebbar ist zur Feststellung der sich senkrecht zur Waagenplatte (7) erstreckenden Abmessung des Gegenstandes (18).

2. Vorrichtung nach Anspruch 1,
dadurch gekennzeichnet, daß an zwei senkrecht zueinander stehenden Rändern der Waagenplatte (7) Anschläge (8) für das Anlegen des Gegenstandes (18) vorgesehen sind.

3. Vorrichtung nach Anspruch 2,
dadurch gekennzeichnet, daß die Öffnungen (10,11) in der Waagenplatte (7) in zwei zueinander senkrechten, zu den Rändern der Waagenplatte (7) parallelen Richtungen vorgegebene gegenseitige Abstände aufweisen.

4. Vorrichtung nach einem der Ansprüche 1 bis 3,
dadurch gekennzeichnet, daß der Deckel (14) transparent ist.

5. Vorrichtung nach einem der Ansprüche 1 bis 4,
dadurch gekennzeichnet, daß die Verschiebung des Deckels (14) zum auf der Waagenplatte (7) liegenden Gegenstand (18) angehalten wird, wenn ein Anstieg des Gewichts des Gegenstandes (18) aufgrund der Deckelbelastung festgestellt wird.

6. Vorrichtung nach einem der Ansprüche 1 bis 5,
dadurch gekennzeichnet, daß unterhalb der Öffnungen (10,11) in der Waagenplatte (7) jeweils ein Lichtsender (12) und ein Lichtempfänger (13) und räumlich zugeordnet im Deckel (14) jeweils ein Reflexionselement (16) angeordnet sind.

7. Vorrichtung nach Anspruch 6,
dadurch gekennzeichnet, daß das Reflexionselement ein Prisma (16) ist, das den auftreffenden Lichtstrahl in vorgegebenem Abstand parallel reflektiert.
